# EUROPEAN PATENT APPLICATION

(11) **EP 4 513 579 A1**
(43) Date of publication of application: **26.02.2025**
(21) Application number: 23192464.8
(22) Date of filing: 21.08.2023
(51) Int. Cl.: H01M 4/04, H01M 4/62, H01M 10/054

(54) **ALKALINE SLURRY COMPOSITION, ELECTRODE COATING, BATTERY, MANUFACTURING PROCESSES, AND USES**

(71) Applicant: Altris AB, 753 18 Uppsala (SE); Northvolt AB, 112 47 Stockholm (SE)
(72) Inventor: Mogensen, Ronnie, 756 44 Uppsala (SE); Buckel, Alexander, 754 26 Uppsala (SE); Sturk, Sofia, 754 63 Uppsala (SE); Börjesson, Eric, 754 32 Uppsala (SE); Hess, Lars Henning, 722 19 Västerås (SE)
(74) Representative: AWA Sweden AB

(57) **Abstract**

The present invention relates to a slurry composition, and sodium battery electrode coating material comprising at least one electrode active material, at least one binder, at least one alkaline additive, and optionally at least one conductive agent, wherein said alkaline additive is selected from metal hydroxides, metal carbonates, metal bicarbonates, metal silicates, ammonia, metal amines, metal amides, metal hydrides, metal oxides, metal cyanides, or any combination thereof. The present invention further relates to electrodes, and batteries comprising said electrode active material or made of said slurry coating. The present invention further relates to methods of manufacturing the slurry composition, electrode coating material, electrodes, and batteries thereof.

## Description

### Technical field

The present invention relates to sodium ion batteries, electrodes therein, electrode coatings therein, manufacturing processes and uses thereof.

### Background

There is an increasing demand for electric vehicles, and storage possibilities of energy. Current technologies use lithium-ion batteries, which consists of nowadays expensive lithium, and is only sourced from a few places in the world such as China and South America. Lithium is not abundant and with increasing demand in batteries, the lithium inventory will become depleted. Lithium-ion batteries may have a major market share of rechargeable batteries, but alternatives such as sodium ion batteries represent an attractive alternative to lithium-ion batteries. Sodium-ion batteries contain sodium, which is an abundant material and everywhere accessible. Sodium ion batteries are shown an increasing interest in order diversify the battery industry in view of raw materials but also show good storing capacity of energy.

As the world's resources are finite, the use of them is important. Recycling of materials, and improving performance and lifetime of batteries is key for improving the pace of electrification and use of renewable energy, in order to faster decrease the industrialised world's dependency on petroleum and natural gas.

In order to provide a sufficient supply to the battery demand, batteries consisting of abundant and easy to source materials are needed. Thus, there is a need for new batteries and components thereof to overcome the problems with conventional products and to provide new batteries with improved performance.

### Summary of the invention

The present invention provides ways to provide better adhesion of electrode coating to a current collector, such as an aluminium foil, improved cycle life and better performance of a sodium-ion battery. The scope of the present invention is set by the appended claims.

In one aspect the present invention relates to a sodium battery electrode coating material comprising at least one electrode active material, at least one binder, at least one alkaline additive, and optionally at least one conductive agent, wherein said alkaline additive is selected from metal hydroxides, metal carbonates, metal bicarbonates, metal silicates, ammonia, metal amines, metal amides, metal hydrides, metal oxides, metal cyanides, or any combination thereof.

In one aspect the present invention relates to a slurry composition for a sodium battery electrode comprising at least one electrode active material, at least one binder, at least one alkaline additive, at least one solvent, and optionally at least one conductive agent, and
wherein said alkaline additive is selected from metal hydroxides, metal carbonates, metal bicarbonates, metal silicates, ammonia, metal amines, metal amides, metal hydrides, metal oxides, metal cyanides, or any combination thereof.

The sodium battery electrode coating material or the slurry composition for a sodium battery electrode, whrein said electrode active material may be selected from cathode active materials (CAM), or anode active materials (AAM), preferably being anode active materials (AAM).

The sodium battery electrode coating material, or the slurry composition for a sodium battery electrode, wherein said anode active materials (AAM) may comprise hard carbon, glassy carbon, carbon black, or graphite, or any combination thereof, preferably comprises hard carbon.

The sodium battery electrode coating material, or the slurry composition for a sodium battery electrode, wherein said cathode active materials (CAM) may comprise sodium containing compounds; preferably comprises sodium metal, sodium containing alloys, sodium containing oxides, sodium containing cyanides, or any combination thereof; preferably comprises sodium transition metal oxides, sodium transition metal cyanides, or any combination thereof; preferably comprises sodium transition metal cyanides having 6 cyanide groups per formula unit; preferably comprises Prussian Blue (PB) or its derivatives Prussian Blue Analogues (PBA); preferably comprises Prussian White (PW).

The sodium battery electrode coating material, or the slurry composition for a sodium battery electrode, wherein the transition metals of the sodium transition metal oxides, or sodium transition metal cyanides may be selected from manganese (Mn), Iron (Fe), Aluminium (Al), Titanium (Ti), Nickel (Ni), Vanadium (V), Cobalt (Co), or any combination thereof, preferably the transition metals of the sodium transition metal oxides, or sodium transition metal cyanides are selected from Fe-Fe, Mn-Fe, Fe-Ni, Ni, or Co, more preferably Fe-Fe.

The sodium battery electrode coating material, or the slurry composition for a sodium battery electrode, wherein said at least one binder may be selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof; preferably said at least one binder is sodium carboxymethyl cellulose (Na-CMC), styrene butadiene rubber (SBR), or a combination thereof.

The sodium battery electrode coating material, or the slurry composition for a sodium battery electrode, wherein said alkaline additive may be selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof;
preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

The sodium battery electrode coating material, or the slurry composition for a sodium battery electrode, wherein said alkaline additive may be present in an amount of 0.0005% to 0.5% by weight based on the total weight of electrode active material, binder, any conductive agent, and any alkaline additive of the electrode, preferably in an amount of 0.001-0.1 % by weight based on the total weight of electrode active material, binder, any conductive agent, and any alkaline additive of the electrode, preferably in an amount of 0.003-0.1 %, 0.002-0.008 %, 0.005-0.1 %, 0.005-0.09 %, 0.008-0.07 %, or 0.01-0.05 % by weight based on the total weight of electrode active material, binder, any conductive agent, and any alkaline additive of the electrode.

The sodium battery electrode coating material, or the slurry composition for a sodium battery electrode, wherein said alkaline additive may be selected from:
- sodium hydroxide (NaOH) and provided in an amount of 0.01-0.04 %, preferably 0.015-0.035 %, by weight based on the total weight of electrode active material, binder, any conductive agent, and any alkaline additive of the electrode,
- sodium carbonate (Na₂CO₃) and provided in an amount of 0.01-0.06 %, preferably 0.013-0.06 % or 0.02-0.05 %, by weight based on the total weight of electrode active material, binder, any conductive agent, and any alkaline additive of the electrode,
- sodium bicarbonate (NaHCO₃) and provided in an amount of 0.02-0.09 %, preferably 0.021-0.09 or 0.03-0.08 %, by weight based on the total weight of electrode active material, binder, any conductive agent, and any alkaline additive of the electrode, or
- any combination thereof.

The sodium battery electrode coating material, or the slurry composition for a sodium battery electrode, wherein said at least one conductive agent may be selected from carbon black, graphite, graphene, carbon nanotubes (CNT), or any combination thereof; preferably said at least one conductive agent is carbon black.

In one aspect the present invention relates to a process of producing a slurry composition for a sodium battery electrode according to anyone of claims 2 or 3-10 comprising the steps of:
a) provision of said at least one electrode active material,
b) provision of said at least one binder,
c) optionally provision of said at least one conductive agent,
d) provision of said at least one solvent,
e) mixing said electron active material, said at least one binder, said at least one solvent, and said optional at least one conductive agent to obtain a slurry,
f) admixing at least one alkaline additive to the slurry to increase the pH and provide the slurry composition.

In one aspect the present invention relates to a process of producing a sodium battery electrode coating material comprising provision of the slurry composition for a sodium battery electrode, or the slurry composition for a sodium battery electrode obtained from the present process,
and further comprising the steps of:
g) coating the slurry composition having increased pH onto a current collector,
   and
h) drying the coated current collector to provide the sodium battery electrode coating material.

The process producing a sodium battery electrode coating material, wherein the current collector may be a metal foil, preferably the metal foil is aluminium foil.

In one aspect the present invention relates to a process for manufacturing an electrode for a sodium ion battery comprising provision of the sodium battery electrode coating material, or the sodium battery electrode coating material obtained from the present process, and further comprising the steps of:
i) calendaring the dried coated current collector, and
j) optionally slitting the calendared current collector.

In one aspect the present invention relates to an electrode for a sodium ion battery comprising the sodium battery electrode coating material or comprising the sodium battery electrode coating material obtained from the process of producing a sodium battery electrode coating material; or obtained by the process for manufacturing an electrode for a sodium ion battery.

In one aspect the present invention relates to a method for manufacturing a sodium ion battery cell comprising the steps of:
i. providing at least one first electrode, or obtained by the present process,
ii. providing at least one second electrode for opposite charge,
iii. optional singulation of the at least one first electrode, and the at least second electrode,
iv. providing at least one separator,
v. assembling the at least one first electrode, the at least one second electrode, and at least one separator by stacking and/or winding,
vi. optionally drying the assembled at least one first electrode, the at least one second electrode, and the at least one separator,
vii. arranging the, optionally dried, assembled at least one first electrode, the at least one second electrode, and the at least one separator in a battery casing,
viii. filling the battery casing with an electrolyte,
ix. sealing the battery casing to form battery cell.

The method for manufacturing a sodium ion battery cell, wherein the at least one first electrode may be an anode, and the at least one second electrode is a cathode.

The method for manufacturing a sodium ion battery cell, wherein said separator may be selected from materials being chemically stable and electrically insulating, preferably selected from polyolefins, such as polypropylene or polyethylene; cellulose; glass fiber; or any combination thereof.

In one aspect the present invention relates to a sodium ion battery cell obtained by the present method.

In one aspect the present invention relates to use of the present electrode in a sodium ion battery.

### Brief description of the drawings

Figure 1 is showing a graph of a cycling curve of coin cell with and without alkaline additive in the anode electrode coating.
Figure 2 is showing a graph of discharge fading ratio over cycle number with and without alkaline additive in the anode electrode coating.

### Detailed description

The present invention relates to a sodium battery electrode coating material comprising at least one electrode active material, at least one binder, at least one alkaline additive, and optionally at least one conductive agent.

The present invention also relates to a slurry composition for a sodium battery electrode comprising at least one electrode active material, at least one binder, at least one solvent, at least one alkaline additive, and optionally at least one conductive agent.

The electrode active material used in the coating material or slurry composition may be selected from cathode active materials (CAM), or anode active materials (AAM). However, the electrode active material is preferably anode active materials (AAM). The sodium battery electrode coating material is preferably a sodium anode electrode coating material. The slurry composition for an electrode is preferably a slurry composition for an anode electrode. The electron active material may be provided as a fine powder.

The anode active materials (AAM) may be hard carbon, glassy carbon, carbon black, or graphite, or any combination thereof, preferably being hard carbon.

The cathode active materials (CAM) may comprise sodium containing compounds; preferably comprises sodium metal, sodium containing alloys, sodium containing oxides, sodium containing cyanides, or any combination thereof; preferably comprises sodium transition metal oxides, sodium transition metal cyanides, or any combination thereof; preferably comprises sodium transition metal cyanides having 6 cyanide groups per formula unit; preferably comprises Prussian Blue (PB) or its derivatives Prussian Blue Analogues (PBA); preferably comprises Prussian White (PW).

The general chemical formula for Prussian Blue Analogues (PBA) can be expressed as AaMb[M'c(CN)6]d, wherein A is sodium, and 1 < a ≤ 2, wherein M and M' are transition metals, preferably selected from iron and/or manganese, wherein 0 < b < 2, 1 < c < 2, and wherein 1 < d < 2. Anhydrous phase of Prussian white and hydrated phase of Prussian white may be preferred.

The transition metals of the sodium transition metal oxides, or sodium transition metal cyanides may be selected from manganese (Mn), Iron (Fe), Aluminium (Al), Titanium (Ti), Nickel (Ni), Vanadium (V), Cobalt (Co), or any combination thereof. Preferred transition metals of the sodium transition metal oxides, or sodium transition metal cyanides may be selected from Fe-Fe, Mn-Fe, Fe-Ni, Ni, or Co. Preferred are Prussian Blue Analogues (PBA) selected from Fe-Fe-PBA, Mn-Fe-PBA, Fe-Ni-PBA, Ni-PBA, Co-PBA, or any combination thereof, especially Fe-Fe-PBA.

The at least one binder used in the coating material or slurry composition may be selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof; preferably said at least one binder is sodium carboxymethyl cellulose (Na-CMC), styrene butadiene rubber (SBR), or a combination thereof.

The alkaline additive used in the coating material or slurry composition is selected from metal hydroxides, metal carbonates, metal bicarbonates, metal silicates, ammonia, metal amines, metal amides, metal hydrides, metal oxides, metal cyanides, or any combination thereof. The alkaline additive used may be selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

The compounds used as alkaline additive may be metal amines comprising 1 to 4 amine groups per formula unit, metal oxides comprising 1 to 4 oxygen atoms per formula unit, or metal cyanides comprising 1 to 4 cyanide groups per formula unit. The alkaline additive may be selected from:
- sodium hydroxide (NaOH) and provided in an amount of 0.01-0.04 %, preferably 0.015-0.035 %, by weight based on the total weight of electrode active material, binder, any conductive agent, and any alkaline additive of the electrode,
- sodium carbonate (Na₂CO₃) and provided in an amount of 0.01-0.06 %, preferably 0.013-0.06 % or 0.02-0.05 %, by weight based on the total weight of electrode active material, binder, any conductive agent, and any alkaline additive of the electrode,
- sodium bicarbonate (NaHCO₃) and provided in an amount of 0.02-0.09 %, preferably 0.021-0.09 or 0.03-0.08 %, by weight based on the total weight of electrode active material, binder, any conductive agent, and any alkaline additive of the electrode, or
- any combination thereof.

The alkaline additive may preferably be selected from one of:
- sodium hydroxide (NaOH) and provided in an amount of 0.01-0.04 %, preferably 0.015-0.035 %, by weight based on the total weight of electrode active material, binder, any conductive agent, and any alkaline additive of the electrode,
- sodium carbonate (Na₂CO₃) and provided in an amount of 0.010-0.06 %, preferably0.013-0.06 %, or 0.02-0.05 %, by weight based on the total weight of electrode active material, binder, any conductive agent, and any alkaline additive of the electrode,
- sodium bicarbonate (NaHCO₃) and provided in an amount of 0.02-0.09 %, such as 0.021-0.09 %, or 0.03-0.08 %, by weight based on the total weight of electrode active material, binder, any conductive agent, and any alkaline additive of the electrode,
- sodium hydroxide (NaOH) and sodium carbonate (Na₂CO₃), wherein NaOH is provided in an amount of 0.01-0.04 %, preferably 0.015-0.035 %, by weight based on the total weight of electrode active material, binder, any conductive agent, and any alkaline additive of the electrode, and Na₂CO₃ is provided in an amount of 0.01-0.06 %, preferably 0.013-0.06 %, or 0.02-0.05 %, by weight based on the total weight of electrode active material, binder, any conductive agent, and any alkaline additive of the electrode, or
- sodium hydroxide (NaOH) and sodium bicarbonate (NaHCO₃), wherein NaOH is provided in an amount of 0.01-0.04 %, preferably 0.015-0.035 %, by weight based on the total weight of electrode active material, binder, any conductive agent, and any alkaline additive of the electrode, and NaHCO₃ is provided in an amount of 0.02-0.09 %, preferably 0.021-0.09, or 0.03-0.08 %, by weight based on the total weight of electrode active material, binder, any conductive agent, and any alkaline additive of the electrode.

The alkaline additive may be provided to obtain a pH of the slurry composition of about 8-13, such as about 9-13, or about 9.5-13.

The alkaline additive may be present in an amount of 0.0005% to 0.5% by weight based on the total weight of electrode active material, binder, any conductive agent, and any alkaline additive of the electrode, preferably in an amount of 0.001-0.1 % by weight based on the total weight of electrode active material, binder, any conductive agent, and any alkaline additive of the electrode, preferably in an amount of 0.003-0.1 %, 0.002-0.008 %, 0.005-0.1 %, 0.005-0.09 %, 0.008-0.07 %, or 0.01-0.05 % by weight based on the total weight of electrode active material, binder, any conductive agent, and any alkaline additive of the electrode.

If present, the at least one conductive agent may be selected from carbon black, graphite, graphene, carbon nanotubes (CNT), or any combination thereof; preferably said at least one conductive agent is carbon black. It is to be noted that if an anode active material comprising carbon black and/or graphite is used, then no conductive agent is needed in the present slurry composition, or coating material provided herein. Thus, if carbon black and/or graphite is provided as anode active material(s) no further conductive agent is provided to obtain the present slurry composition, coating material, or electrode presented herein.

If the present slurry composition or the sodium ion battery electrode coating material is intended for use in an anode, they may each comprise at least one anode active material, preferably hard carbon; at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof; optionally at least one conductive agent, preferably the at least one conductive agent is selected from carbon black, graphite, graphene, carbon nanotubes (CNT), or any combination thereof, more preferably carbon black; and at least one alkaline additive selected from metal hydroxides, metal carbonates, metal bicarbonates, metal silicates, ammonia, metal amines, metal amides, metal hydrides, metal oxides, metal cyanides, or any combination thereof, preferably selected from alkali metal hydroxides, alkali metal carbonates, alkali metal bicarbonates, alkali metal silicates, ammonia, amines or amides or oxides, or cyanides of metals selected from the group alkali metals, alkaline earth metals, transition metals, aluminium, gallium, indium, or thallium, or any combination thereof, and more preferably selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof. The slurry composition or the sodium ion battery electrode coating material may comprise at least one anode active material being hard carbon; at least one binder being sodium carboxymethyl cellulose (Na-CMC), styrene butadiene rubber (SBR), or a combination thereof; optionally at least one conductive agent being carbon black; and at least one alkaline additive selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof.

The present invention relates to a process of producing the present slurry composition for a sodium battery electrode comprising the steps of:
a) provision of said at least one electrode active material,
b) provision of said at least one binder,
c) optionally provision of said at least one conductive agent,
d) provision of said at least one solvent,
e) mixing said electron active material, said at least one binder, said at least one solvent, and said optional at least one conductive agent to obtain a slurry,
f) admixing at least one alkaline additive to the slurry to increase the pH and provide the slurry composition.

Said electron active material may be provided as a fine powder. The electron active material may be ground into a fine powder before said provision.

The alkaline additive may be provided to obtain a pH of the slurry composition of about 8-13, such as 9-13, or 9.5-13.

Herein is provided a process of producing a slurry composition for a sodium battery electrode comprising the steps of:
a) provision of at least one anode active material, preferably hard carbon, or provision of at least one cathode active material, preferably selected from sodium metal, sodium containing alloys, sodium containing oxides, sodium containing cyanides, or any combination thereof; preferably sodium transition metal oxides, sodium transition metal cyanides, or any combination thereof; preferably selected from sodium transition metal cyanides having 6 cyanide groups per formula unit; more preferably selected from Prussian Blue (PB) or its derivatives Prussian Blue Analogues (PBA); preferably is Prussian White (PW);
b) provision of at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof,
c) optionally provision of at least one conductive agent, preferably the at least one conductive agent is selected from carbon black, graphite, graphene, carbon nanotubes (CNT), or any combination thereof, more preferably carbon black,
d) provision of at least one solvent, preferably selected from water or organic solvents,
e) mixing said electron active material, said at least one binder, said at least one solvent, and said optional at least one conductive agent to obtain a slurry,
f) admixing at least one alkaline additive to the slurry to obtain a slurry composition having increased pH,

wherein the alkaline additive is selected from metal hydroxides, metal carbonates, metal bicarbonates, metal silicates, ammonia, metal amines, metal amides, metal hydrides, metal oxides, metal cyanides, or any combination thereof;
preferably selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and
more preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

It is important to add the at least one alkaline additive to the slurry as a last step in the slurry preparation. If the alkaline additive is not added last, it would interact with one or some of the components included, and thus, not be as active and influence later added components. If the alkaline additive is not added last, the slurry provided would not provide the desired effect to increase the performance or cycle life of an electrode or battery obtained from the slurry. The addition of the alkaline additive after mixing the other components is important to assure improved adhesion to a current collector, e.g., a an aluminium foil, to which the slurry is provided in the manufacturing of an electrode, preferably an anode.

The present invention relates to a process of producing the present sodium battery electrode coating material comprising provision of the slurry composition for a sodium battery electrode or the present slurry composition for a sodium battery electrode obtained from the present process therefore,
and further comprising the steps of:
g) coating the slurry composition having increased pH onto a current collector,
   and
h) drying the coated current collector to provide the sodium battery electrode coating material.

The current collector may be a metal foil, preferably the metal foil is aluminium foil.

Herein is provided a process of producing a sodium battery electrode coating material comprising provision of the slurry composition for a sodium battery electrode comprising the steps of:
a) provision of at least one anode active material, preferably hard carbon, or provision of at least one cathode active material, preferably selected from sodium metal, sodium containing alloys, sodium containing oxides, sodium containing cyanides, or any combination thereof; preferably sodium transition metal oxides, sodium transition metal cyanides, or any combination thereof; preferably selected from sodium transition metal cyanides having 6 cyanide groups per formula unit; more preferably selected from Prussian Blue (PB) or its derivatives Prussian Blue Analogues (PBA); preferably is Prussian White (PW);
b) provision of at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof,
c) optionally provision of at least one conductive agent, preferably the at least one conductive agent is selected from carbon black, graphite, graphene, carbon nanotubes (CNT), or any combination thereof, more preferably carbon black,
d) provision of at least one solvent, preferably selected from water or organic solvents,
e) mixing said electron active material, said at least one binder, said at least one solvent, and said optional at least one conductive agent to obtain a slurry,
f) admixing at least one alkaline additive to the slurry to obtain a slurry composition having increased pH,
g) coating the slurry composition having increased pH onto a current collector, preferably an aluminium foil, and
h) drying the coated current collector to provide the sodium battery electrode coating material,
wherein the alkaline additive is selected from metal hydroxides, metal carbonates, metal bicarbonates, metal silicates, ammonia, metal amines, metal amides, metal hydrides, metal oxides, metal cyanides, or any combination thereof;
preferably selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and
more preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

The drying is made to secure the coated materials to the current collector and remove any remaining solvents. Drying may be made in an oven.

The present invention relates to a process for manufacturing an electrode for a sodium ion battery comprising provision of the present sodium battery electrode coating material, or present sodium battery electrode coating material obtained from the process therefore, and further comprising the steps of:
i) calendaring the dried coated current collector, and
j) optionally slitting the calendared current collector.

Herein is provided a process for manufacturing an electrode comprising the steps of:
a) provision of at least one anode active material, preferably hard carbon, or provision of at least one cathode active material, preferably selected from sodium metal, sodium containing alloys, sodium containing oxides, sodium containing cyanides, or any combination thereof; preferably sodium transition metal oxides, sodium transition metal cyanides, or any combination thereof; preferably selected from sodium transition metal cyanides having 6 cyanide groups per formula unit; more preferably selected from Prussian Blue (PB) or its derivatives Prussian Blue Analogues (PBA); preferably is Prussian White (PW);
b) provision of at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof,
c) optionally provision of at least one conductive agent, preferably the at least one conductive agent is selected from carbon black, graphite, graphene, carbon nanotubes (CNT), or any combination thereof, more preferably carbon black,
d) provision of at least one solvent, preferably selected from water or organic solvents,
e) mixing said electron active material, said at least one binder, said at least one solvent, and said optional at least one conductive agent to obtain a slurry,
f) admixing at least one alkaline additive to the slurry to obtain a slurry composition having increased pH,
g) coating the slurry composition having increased pH onto a current collector, preferably an aluminium foil, and
h) drying the coated current collector to provide the sodium battery electrode coating material,
i) calendaring the dried coated current collector, and
j) optionally slitting the calendared current collector,

wherein the alkaline additive is selected from metal hydroxides, metal carbonates, metal bicarbonates, metal silicates, ammonia, metal amines, metal amides, metal hydrides, metal oxides, metal cyanides, or any combination thereof;
   preferably selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and
more preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

The above mentioned process is the process of manufacturing an electrode including the processes for obtaining a slurry composition and a sodium battery electrode coating material according to the present invention.

The drying is made to secure the coated materials to the foil and remove any remaining solvents. Drying may be made in an oven.

The calendaring of the dry coated metal foil involves passing through a series of rollers to compress and smooth the coating, ensuring uniform thickness and proper adhesion.

The resulting coated anode and cathode foils are then ready to be cut to size and combined with other components to build a battery cell, e.g., a sodium-ion battery cell.

Herein is provided a sodium ion battery anode electrode comprising at least one anode active material, preferably hard carbon; at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof; optionally at least one conductive agent, preferably the at least one conductive agent is selected from carbon black, graphite, graphene, carbon nanotubes (CNT), or any combination thereof, more preferably carbon black; and at least one alkaline additive selected from metal hydroxides, metal carbonates, metal bicarbonates, metal silicates, ammonia, metal amines, metal amides, metal hydrides, metal oxides, metal cyanides, or any combination thereof, preferably selected from alkali metal hydroxides, alkali metal carbonates, alkali metal bicarbonates, alkali metal silicates, ammonia, amines or amides or oxides, or cyanides of metals selected from the group alkali metals, alkaline earth metals, transition metals, aluminium, gallium, indium, or thallium, or any combination thereof, and more preferably selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof. The anode electrode may further comprise a current collector being an aluminium foil. The sodium ion battery anode electrode may comprise at least one anode active material being hard carbon; at least one binder being sodium carboxymethyl cellulose (Na-CMC), styrene butadiene rubber (SBR), or a combination thereof; optionally at least one conductive agent being carbon black; and at least one alkaline additive selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof.

Herein is provided a sodium ion battery cathode electrode comprising at least one cathode active material selected from sodium metal, sodium containing alloys, sodium containing oxides, sodium containing cyanides, or any combination thereof, preferably sodium transition metal oxides, sodium transition metal cyanides, or any combination thereof, preferably selected from sodium transition metal cyanides having 6 cyanide groups per formula unit, more preferably selected from Prussian Blue (PB) or its derivatives Prussian Blue Analogues (PBA); preferably is Prussian White (PW); at least one binder, preferably selected from selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, more preferably said at least one binder is sodium carboxymethyl cellulose (Na-CMC), styrene butadiene rubber (SBR), or a combination thereof; optionally at least one conductive agent, preferably the at least one conductive agent is selected from carbon black, graphite, graphene, carbon nanotubes (CNT), or any combination thereof, more preferably carbon black; and at least one alkaline additive selected from metal hydroxides, metal carbonates, metal bicarbonates, metal silicates, ammonia, metal amines, metal amides, metal hydrides, metal oxides, metal cyanides, or any combination thereof, preferably selected from alkali metal hydroxides, alkali metal carbonates, alkali metal bicarbonates, alkali metal silicates, ammonia, amines or amides or oxides, or cyanides of metals selected from the group alkali metals, alkaline earth metals, transition metals, aluminium, gallium, indium, or thallium, or any combination thereof, and more preferably selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof. The cathode electrode may further comprise a current collector being an aluminium foil.

The present invention relates to an electrode for a sodium ion battery comprising the present sodium battery electrode coating material; or comprising the present sodium battery electrode coating material obtained from the present process of producing a sodium battery electrode coating material; or obtained by the present process for manufacturing an electrode for a sodium ion battery. If the anode of a sodium ion battery comprise the at least one alkaline additive, the cathode may comprise the at least one alkaline additive as an optional feature.

The present invention relates to a method for manufacturing a sodium ion battery cell comprising the steps of:
i. providing at least one first electrode according to the present invention, or obtained by the present process,
ii. providing at least one second electrode for opposite charge,
iii. optional singulation of the at least one first electrode, and the at least second electrode,
iv. providing at least one separator,
v. assembling the at least one first electrode, the at least one second electrode, and at least one separator by stacking and/or winding,
vi. optionally drying the assembled at least one first electrode, the at least one second electrode, and the at least one separator,
vii. arranging the optionally dried, assembled at least one first electrode, the at least one second electrode, and the at least one separator in a battery casing,
viii. filling the battery casing with an electrolyte,
ix. sealing the battery casing to form battery cell.

The step of drying the assembled at least one first electrode, the at least one second electrode, and the at least one separator is preferably performed.

The at least one first electrode according to the present invention is preferably an anode, and the at least one second electrode is a cathode. At least one of the electrodes of a sodium-ion battery cell is an electrode according to the present invention, i.e., produced according to the present process, involving provision of the present slurry composition and present coating material on a current collector. The sodium-ion battery cell may be provided with an anode and/or a cathode according to the invention, and preferably at least the anode is in accordance with the invention.

The separator may be selected from materials being chemically stable and electrically insulating, preferably selected from polyolefins, such as polypropylene or polyethylene; cellulose; glass fiber; or any combination thereof. The separator provided may be made of a monolayer of polymer, such as polypropylene (PP) or polyethylene (PE), or a multilayer of polymers, such as bilayer (e.g., PP/PE) or trilayer (e.g., PP/PE/PP, or PE/PP/PE).

Electrolytes used in the sodium iron battery may be comprising sodium compositions, such as sodium salts, e.g. sodium hexafluorophosphate; organic carbonates, e.g., propylene carbonate, ethylene carbonate, vinylene carbonate, ethyl methyl carbonate, dimethylcarbonate, or diethylcarbonate; or any combination thereof.

Herein is provided a method for manufacturing a sodium ion battery cell comprising the steps of:
i. providing at least one electrode being a cathode,
ii. providing at least one electrode being an anode,
iii. optional singulation of the cathode and anode,
iv. providing at least one separator,
v. assembling the cathode, anode, and separator, preferably by stacking and/or winding,
vi. optionally drying the assembled cathode, anode, and separator,
vii. arranging the, optionally dried, assembled cathode, anode, and separator in a battery casing,
viii. filling the battery casing with an electrolyte,
ix. sealing the battery casing to form battery cell,
wherein the at least one electrode being a cathode comprises:
- at least one cathode active material selected from sodium metals, sodium containing alloys, sodium containing oxides, sodium containing cyanides, or any combination thereof; preferably is selected from sodium transition metal oxides, sodium transition metal cyanides, or any combination thereof; preferably is selected from sodium transition metal cyanides having 6 cyanide groups per formula unit; preferably is Prussian Blue (PB) or its derivatives Prussian Blue Analogues (PBA); preferably is Prussian White (PW),
- at least one binder selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, preferably said at least one binder is sodium carboxymethyl cellulose (Na-CMC), styrene butadiene rubber (SBR), or a combination thereof,
- optionally at least one conductive agent selected from carbon black, graphite, graphene, carbon nanotubes (CNT), or any combination thereof, preferably is carbon black, and
- optionally at least one alkaline additive selected from metal hydroxides, metal carbonates, metal bicarbonates, metal silicates, ammonia, metal amines, metal amides, metal hydrides, metal oxides, metal cyanides, or any combination thereof;
   preferably selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and
   more preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof,
wherein the at least one electrode being an anode comprises:
- at least one anode active material being hard carbon,
- at least one binder selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof, preferably said at least one binder is sodium carboxymethyl cellulose (Na-CMC), styrene butadiene rubber (SBR), or a combination thereof,
- optionally at least one conductive agent selected from carbon black, graphite, graphene, carbon nanotubes (CNT), or any combination thereof, preferably is carbon black, and
- at least one alkaline additive selected from metal hydroxides, metal carbonates, metal bicarbonates, metal silicates, ammonia, metal amines, metal amides, metal hydrides, metal oxides, metal cyanides, or any combination thereof;
   preferably selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof; and
   more preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof,
wherein the at least one separator comprises:
- at least one separator comprises polyolefins, cellulose, glass fiber, or any combination thereof, preferably the separator comprises polypropylene, polyethylene, or any combination thereof, preferably is a monolayer of polypropylene or polyethylene, or bilayer of polypropylene and polyethylene, or trilayer of polypropylene/polyethylene/ polypropylene, or polyethylene/polypropylene/polyethylene.

Herein is also provided a sodium ion battery cell obtained by the present method.

The present sodium ion battery may comprise an anode comprising at least one anode active material being hard carbon; at least one binder being sodium carboxymethyl cellulose (Na-CMC), styrene butadiene rubber (SBR), or a combination thereof; optionally at least one conductive agent being carbon black; and at least one alkaline additive selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof. The anode electrode may further comprise a current collector being an aluminium foil. The present sodium ion battery may further comprise a cathode comprising at least one catode active material being selected from sodium transition metal oxides, sodium transition metal cyanides, or any combination thereof, preferably selected from sodium transition metal cyanides having 6 cyanide groups per formula unit, more preferably selected from Prussian Blue (PB) or its derivatives Prussian Blue Analogues (PBA), such as is Prussian White (PW); at least one binder being sodium carboxymethyl cellulose (Na-CMC), styrene butadiene rubber (SBR), or a combination thereof; optionally at least one conductive agent being carbon black; and optionally at least one alkaline additive selected from alkali metal hydroxides, alkali metal carbonates, alkali metal bicarbonates, cyanides of metals selected from the group alkali metals, alkaline earth metals, transition metals, aluminium, gallium, indium, or thallium, having 1 to 4 cyanide groups per formula unit, or any combination thereof. The cathode electrode may further comprise a current collector being an aluminium foil. The present sodium ion battery may further comprise electrolyte.

The present invention also relates to use of an electrode obtained according to the process for manufacturing an electrode in a sodium ion battery.

### Examples

For the experiment coin-cells were assembled. The cathode provided comprised Prussian white Na₂-xFe[Fe(CN)6]·mH2O with a Na content above 1.8 and negligible water content. The cathode coating on the current collector being an aluminium foil comprised 93 % by weight cathode active material being Prussian white, 3 % by weight of conductive additive being carbon black, and 4 % by weight of binder (being 1% carboxymethyl cellulose, and 3 % by weight of styrene butadiene rubber) based on the total weight of cathode active material, conductive agent, binder, and any alkaline additive present. In this example there was no alkaline additive present in the cathode coating. The anode provided comprised hard carbon as an anode. The anode coating on the current collector being an aluminium foil comprised 96 % by weight anode active material being hard carbon, 4 % by weight of binder (being 2% sodium carboxymethyl cellulose, and 2 % by weight of styrene butadiene rubber), and 0 or 0.017 % by weight of alkaline additive being sodium hydroxide, based on the total weight of anode active material, binder, any conductive agent, and any alkaline additive present. In this example there was no conductive additive present in the anode coating.

The cathode diameter was 13 mm and anode diameter was 16 mm. The cathode electrode with a mass loading of 22.7 mg/cm² was manufactured by coating a current collector of aluminium with a slurry comprising Prussian white being mixed with solvent (water), conductive additive and binder. The anode electrode with a mass loading of 13 mg/cm² was manufactured by coating a current collector of aluminium with a slurry comprising hard carbon being mixed with solvent (water), conductive additive, binder, and alkaline additive. To obtain the alkaline slurry composition, a mixture of hard carbon, solvent, and conductive additive, was admixed with 0.017 % by weight of the alkaline additive NaOH relative to the anode solids content. Celgard^{®}, a trilayer of PP/PE/PP, was used as separator. Electrolyte was provided as 70 µl of NaPF6 in a mix of carbonates was injected. The electrolyte comprised 16 wt% NaPF6, in a mix of carbonates comprising 11 wt% ethylene carbonate (EC), 10 wt% propylene carbonate (PC), 32 wt% ethyl methyl carbonate (EMC), and 31 wt% diethyl carbonate (DEC). The battery cell was assembled and finished.

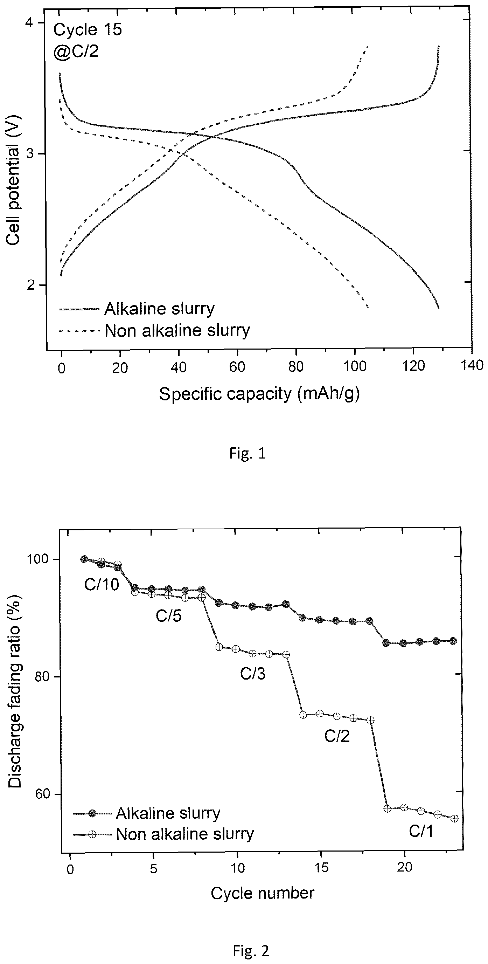

The voltage profiles in figures 1 and 2 were measured with the standard method galvanostatic cycling using the Neware battery testing system BTS82. The standardized test is galvanostatic cycling, where a constant current is applied (herein defined as the C-rate). The galvanostatic cycling of cells was performed at 1.8-3.8 V, for Fig. 1 and 2.

Fig. 1 is showing cycling curve of the coin cell, which was cycled at a C-rate of C/2. The figure 2 depicts the 15^{th} charge and discharge cycle with and without alkaline slurry. As can be seen from fig. 1 more specific capacity is obtained using an alkaline slurry.

Fig. 2 is showing discharge fading ratio over cycle number with and without alkaline slurry cycled at different C-rates (C/10, C/5, C/5. C/2, C/1). As can be seen from fig. 2 stability over different C-rates is improved using an alkaline slurry, especially upon increasing cycle number.

## Claims

1. A sodium battery electrode coating material comprising at least one electrode active material, at least one binder, at least one alkaline additive, and optionally at least one conductive agent,
wherein said alkaline additive is selected from metal hydroxides, metal carbonates, metal bicarbonates, metal silicates, ammonia, metal amines, metal amides, metal hydrides, metal oxides, metal cyanides, or any combination thereof.

2. A slurry composition for a sodium battery electrode comprising at least one electrode active material, at least one binder, at least one alkaline additive, at least one solvent, and optionally at least one conductive agent, and
wherein said alkaline additive is selected from metal hydroxides, metal carbonates, metal bicarbonates, metal silicates, ammonia, metal amines, metal amides, metal hydrides, metal oxides, metal cyanides, or any combination thereof.

3. The sodium battery electrode coating material according to claim 1, or the slurry composition for a sodium battery electrode according to claim 2, wherein said electrode active material is selected from cathode active materials (CAM), or anode active materials (AAM), preferably is anode active materials (AAM).

4. The sodium battery electrode coating material according to claim 1 or 3, or the slurry composition for a sodium battery electrode according to claim 2 or 3, wherein said anode active materials (AAM) comprises hard carbon, glassy carbon, carbon black, or graphite, or any combination thereof, preferably comprises hard carbon.

5. The sodium battery electrode coating material according to anyone of claims 1 or 3-4, or the slurry composition for a sodium battery electrode according to anyone of claims 2 or 3-4, wherein said cathode active materials (CAM) comprises sodium containing compounds; preferably comprises sodium metal, sodium containing alloys, sodium containing oxides, sodium containing cyanides, or any combination thereof; preferably comprises sodium transition metal oxides, sodium transition metal cyanides, or any combination thereof; preferably comprises sodium transition metal cyanides having 6 cyanide groups per formula unit; preferably comprises Prussian Blue (PB) or its derivatives Prussian Blue Analogues (PBA); preferably comprises Prussian White (PW).

6. The sodium battery electrode coating material according to claim 5, or the slurry composition for a sodium battery electrode according to claim 5, wherein the transition metals of the sodium transition metal oxides, or sodium transition metal cyanides are selected from manganese (Mn), Iron (Fe), Aluminium (Al), Titanium (Ti), Nickel (Ni), Vanadium (V), Cobalt (Co), or any combination thereof, preferably the transition metals of the sodium transition metal oxides, or sodium transition metal cyanides are selected from Fe-Fe, Mn-Fe, Fe-Ni, Ni, or Co, more preferably Fe-Fe.

7. The sodium battery electrode coating material according to anyone of claims 1 or 3-6, or the slurry composition for a sodium battery electrode according to anyone of claims 2 or 3-6, wherein said at least one binder is selected from styrene butadiene rubber (SBR), polyacetylene, sodium lignosulfonate (NaLS), sodium alginate, guar, polyvinylidene fluoride (PVDF), sodium carboxymethyl cellulose (Na-CMC), polyacrylic acid (PAA), and sodium polyacrylate (PANa), polytetrafluoro ethylene (PTFE), hexafluoro propylene (HFP), or any combination thereof; preferably said at least one binder is sodium carboxymethyl cellulose (Na-CMC), styrene butadiene rubber (SBR), or a combination thereof.

8. The sodium battery electrode coating material according to anyone of claims 1 or 3-7, or the slurry composition for a sodium battery electrode according to anyone of claims 2 or 3-7, wherein said alkaline additive is selected from alkali metal hydroxides; alkali metal carbonates; alkali metal bicarbonates; alkali metal silicates; ammonia; amines or amides or oxides, or cyanides of metals selected from the group alkali metals, alkaline earth metals, transition metals, aluminium, gallium, indium, or thallium; or any combination thereof;
preferably selected from alkali metal hydroxides; alkali metal carbonates; alkali metal bicarbonates; cyanides of metals selected from the group alkali metals, alkaline earth metals, transition metals, aluminium, gallium, indium, or thallium, having 1 to 4 cyanide groups per formula unit; or any combination thereof.

9. The sodium battery electrode coating material according to anyone of claims 1 or 3-8, or the slurry composition for a sodium battery electrode according to anyone of claims 2 or 3-8, wherein said alkaline additive is present in an amount of 0.0005% to 0.5% by weight based on the total weight of electrode active material, binder, any conductive agent, and any alkaline additive of the electrode, preferably in an amount of 0.001-0.1 % by weight based on the total weight of electrode active material, binder, any conductive agent, and any alkaline additive of the electrode, preferably in an amount of 0.003-0.1 %, 0.002-0.008%, 0.005-0.1 %, 0.005-0.09 %, 0.008-0.07 %, or 0.01-0.05 % by weight based on the total weight of electrode active material, binder, any conductive agent, and any alkaline additive of the electrode.

10. The sodium battery electrode coating material according to claim 8 or 9, or the slurry composition for a sodium battery electrode according to claim 8 or 9, wherein said alkaline additive is selected from:
• sodium hydroxide (NaOH) and provided in an amount of 0.01-0.04 %, preferably 0.015-0.035 %, by weight based on the total weight of electrode active material, binder, any conductive agent, and any alkaline additive of the electrode,
• sodium carbonate (Na₂CO₃) and provided in an amount of 0.01-0.06 %, preferably 0.013-0.06 % or 0.02-0.05 %, by weight based on the total weight of electrode active material, binder, any conductive agent, and any alkaline additive of the electrode,
• sodium bicarbonate (NaHCO₃) and provided in an amount of 0.02-0.09 %, preferably 0.021-0.09 or 0.03-0.08 %, by weight based on the total weight of electrode active material, binder, any conductive agent, and any alkaline additive of the electrode, or
• any combination thereof.

11. The sodium battery electrode coating material according to anyone of claims 1 or 3-10, or the slurry composition for a sodium battery electrode according to anyone of claims 2 or 3-10, wherein said at least one conductive agent is selected from carbon black, graphite, graphene, carbon nanotubes (CNT), or any combination thereof; preferably said at least one conductive agent is carbon black.

12. A process of producing a slurry composition for a sodium battery electrode according to anyone of claims 2 or 3-10 comprising the steps of:
a) provision of said at least one electrode active material,
b) provision of said at least one binder,
c) optionally provision of said at least one conductive agent,
d) provision of said at least one solvent,
e) mixing said electron active material, said at least one binder, said at least one solvent, and said optional at least one conductive agent to obtain a slurry,
f) admixing at least one alkaline additive to the slurry to increase the pH and provide the slurry composition.

13. A process of producing a sodium battery electrode coating material comprising provision of the slurry composition for a sodium battery electrode according to anyone of claims 2 or 3-11, or the slurry composition for a sodium battery electrode obtained from the process according to claim 12,
and further comprising the steps of:
g) coating the slurry composition having increased pH onto a current collector, and
h) drying the coated current collector to provide the sodium battery electrode coating material.

14. The process producing a sodium battery electrode coating material according to claim 13, wherein the current collector is a metal foil, preferably the metal foil is aluminium foil.

15. A process for manufacturing an electrode for a sodium ion battery comprising provision of the sodium battery electrode coating material according to anyone of claims 1 or 3-11, or the sodium battery electrode coating material obtained from the process according to claim 13 or 14, and further comprising the steps of:
i) calendaring the dried coated current collector, and
j) optionally slitting the calendared current collector.

16. An electrode for a sodium ion battery comprising the sodium battery electrode coating material according to anyone of claims 1 or 3-11; or comprising the sodium battery electrode coating material obtained from the process of producing a sodium battery electrode coating material according to claim 13 or 14; or obtained by the process for manufacturing an electrode for a sodium ion battery according claim 15.

17. A method for manufacturing a sodium ion battery cell comprising the steps of:
i. providing at least one first electrode according to claim 16, or obtained by the process according to claim 15,
ii. providing at least one second electrode of opposite charge,
iii. optional singulation of the at least one first electrode, and the at least second electrode,
iv. providing at least one separator,
v. assembling the at least one first electrode, the at least one second electrode, and at least one separator by stacking and/or winding,
vi. optionally drying the assembled at least one first electrode, the at least one second electrode, and the at least one separator,
vii. arranging the, optionally dried, assembled at least one first electrode, the at least one second electrode, and the at least one separator in a battery casing,
viii. filling the battery casing with an electrolyte,
ix. sealing the battery casing to form battery cell.

18. The method for manufacturing a sodium ion battery cell according to claim 17, wherein the at least one first electrode is an anode, and the at least one second electrode is a cathode.

19. The method for manufacturing a sodium ion battery cell according to claim 17 or 18, wherein said separator is selected from materials being chemically stable and electrically insulating, preferably selected from polyolefins, such as polypropylene or polyethylene; cellulose; glass fiber; or any combination thereof.

20. A sodium ion battery cell obtained by the method according to anyone of claims 17-19.

21. Use of an electrode according to claim 16 in a sodium ion battery.
